# EUROPEAN PATENT SPECIFICATION

(11) **EP 2 589 288 B1**
(45) Date of publication and mention of the grant of the patent: **14.05.2014**
(21) Application number: 11724681.9
(22) Date of filing: 05.04.2011
(51) Int. Cl.: A01K 39/012

(54) **POULTRY FEEDER**
GEFLÜGELFÜTTERER
MANGEOIRE POUR VOLAILLE

(30) Priority: 02.07.2010 ES 201031022
(43) Date of publication of application: 08.05.2013
(73) Proprietor: Zucami, S. L., 31191 Beriain (Navarra) (ES)
(72) Inventor: ANSOAÍN MARTÍNEZ, Alberto, E-31191 Beriain (Navarra) (ES)
(74) Representative: Pons Ariño, Angel
(86) International application number: PCT/ES2011/070230
(87) International publication number: WO 2012/001189

(56) References cited:
- WO-A1-94/07360
- FR-A1- 2 669 187
- US-A- 3 230 933

## Description

### OBJET OF THE INVENTION

The present invention relates to the field of feeding and watering of animals, and more specifically to devices and apparatus for the feeding of poultry.

The main object of this invention is a feeding trough for poultry, in particular for chickens, which makes it possible for the birds to access the food from their birth when they have a very small size until after their growth, preventing the feed from becoming lost and/or spilling out of the feeding trough due to the action of the chickens themselves.

### BACKGROUND OF THE INVENTION

Currently different types of feeding troughs are known for the feeding of poultry, and more specifically for chickens, which are constituted by recipients to which a general flow of feed is supplied. Generally the walls of these recipients either in the shape of a plate or in the shape of troughs, are low enough so that newly born and small chickens are able to access the food.

The technical problem faced here is that when the chickens grow, once a certain size has been reached, the walls of the feeding trough become too low and this produces the spilling of the feed, by the action of the chickens when they go to eat.

Likewise feeding apparatus and troughs for chickens are known which, despite partially solving said problem, involve high installation costs due to their complex structure, in addition to presenting operating problems, such as for example blockages during the supply of feed, difficulties in the transmission of the mechanism, etc., all of this also taking into account that these types of feeding troughs are designed for poultry installations composed of very long rows of cages, along which said feeding troughs are distributed.

WO94/07360 discloses a feeding trough for poultry according to the preamble of claim 1.

### DESCRIPTION OF THE INVENTION

The present invention has the object of eliminating the aforementioned problems by using a feeding trough which can offer two situations or positions to contain the feed. A first position or situation, in which the feeding trough contains the feed in a position with easy access for the newly born chickens, and a second position in which the feeding trough contains the feed in a chamber that is only accessible to fully grown chickens, with a determined minimum size, and in which the feed which could be spilled is collected by the feeding trough itself in an area which is also accessible by the chickens, in order to not waste the feed that has been spilled or scattered by the chickens and which could fall into this second area.

For this purpose, according to the invention as defined in claim 1, the feeding trough is constituted by a plate with a double coaxial wall, separated radially in between to delimit a central chamber and an annular chamber. The feeding trough also includes a vertical feeding column which is fitted into the bottom of the central chamber in a central position and reaches up to a main feed supply pipe.

The feeding column is composed of two coaxial tubes, one interior which is fixed and the other exterior which is moveable longitudinally over the fixed tube. Said fixed interior tube is found linked in its upper area to the main feed supply pipe. In turn, the exterior tube is fitted over the interior tube with the ability to be moved along the length of the latter between a lower position, in which the mouth of the interior tube in the central chamber is closed, and an upper position, in which the lower edge of said exterior tube remains situated above the free edge of the interior wall of the plate, leaving the mouth of the interior tube in the central chamber open.

In an embodiment not according to the invention, the exterior tube is connected to operating means by way of which the movement of said exterior tube is achieved in a rising direction, from the lower position to the upper position, while the movement in a descending direction is produced by gravity, due to the weight of the exterior tube itself, upon freeing the operating means.

The lower edge of the interior tube is separated from the bottom of the central chamber, preferably situated above the upper edge of the interior wall of the plate. This fixed interior tube is supported by a series of rods or vertical columns linked at their upper part to the internal surface of said tube, the rods being supported at their lower part at the bottom of the central chamber. Likewise, it is envisaged that said rods could be of a metallic nature, of plastic material, etc., and with any type of cross-section, circular, square, etc. On the other hand, the feeding trough object of the invention additionally comprises a coaxial cone in the central chamber, which acts as a feed distribution element.

In turn the operating means of the moveable exterior tube comprise preferably a flexible cord which is fixed at one of its ends to the external surface of said exterior tube and which passes through a ring which is supported by the exterior surface of the fixed interior tube, close to its upper edge. This cord is connected by the free end to a traction cable which runs parallel to the main supply pipe of feed.

Moving the traction cable in one direction pulls the flexible cord from which the exterior tube is suspended, causing the elevation of the same over the fixed interior tube. On the other hand, moving in the opposite direction the traction cable, stops pulling the flexible cable from which the exterior tube is suspended which, due to its weight, will fall to the lower position in which the mouth of the interior tube in the central chamber is closed. With this disposition manipulation is achieved of all the feeding troughs belonging to the same installation, and which are fed from the same main pipe.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1.- Shows a general perspective view of a feeding trough for birds not according to the invention, where its moveable exterior tube can be appreciated in a lower position.
Figure 2.- Shows a top plan view of the feeding trough in figure 1.
Figure 3.- Shows a sectional view of the same feeding trough, taken according to the III-III cutting line of figure 2.
Figure 4.- Shows a similar perspective view to that in figure 1, but with the moveable exterior tube situated in an upper position, allowing the exit of the feed from the main supply pipe.
Figure 5.- Shows a side elevational view of the feeding trough in figure 4, in which it is possible to appreciate the internal chamber of the feeding trough full of feed.
Figure 6.- Shows a sectional view of the feeding trough, according to the VI-VI cutting line of figure 5.
Figure 7.- Shows a general perspective view of a feeding trough for birds according to the preferred embodiment.
Figure 8.- Shows an exploded view of the feeding trough for birds represented in figure 7.
Figure 9.- Shows a top plan view of the feeding trough in figure 7.
Figure 10.- Shows a sectional view according to the IV-IV cutting line of figure 9, with the moveable exterior tube situated in its lower limit position.
Figure 11.- Shows a perspective view of figure 7, where the moveable exterior tube is situated in its upper limit position.
Figure 12.- Shows a sectional view similar to that in figure 10, but with the moveable exterior tube in its upper limit position.

### PREFERRED EMBODIMENT OF THE INVENTION

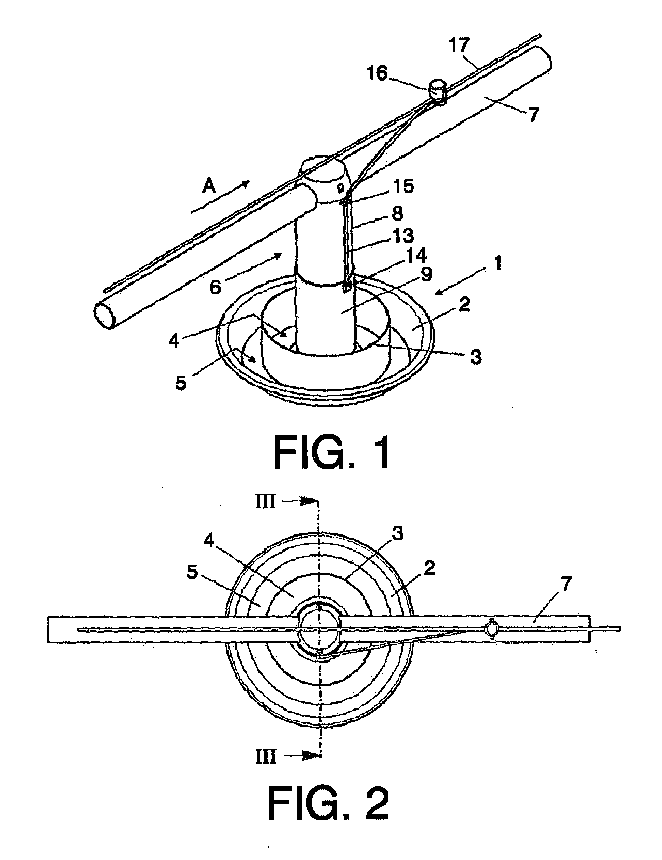

In accordance with an embodiment not according to the invention and shown In figures 1-6, the feeding trough for poultry object of the invention, designed to be used on the floor on the same surface where the chickens or birds are found and move about on, comprises a plate (1) which has an external wall (2) and an internal wall (3), between which a central chamber (4) and an annular chamber (5) are delimited. Inside the central chamber (4) there is a vertical feeding column (6) which comes out of an upper main supply pipe (7) of feed. Said feeding column (6) is composed of two coaxial tubes, one interior (8) fixed and another exterior (9) vertically moveable over the fixed interior tube (8).

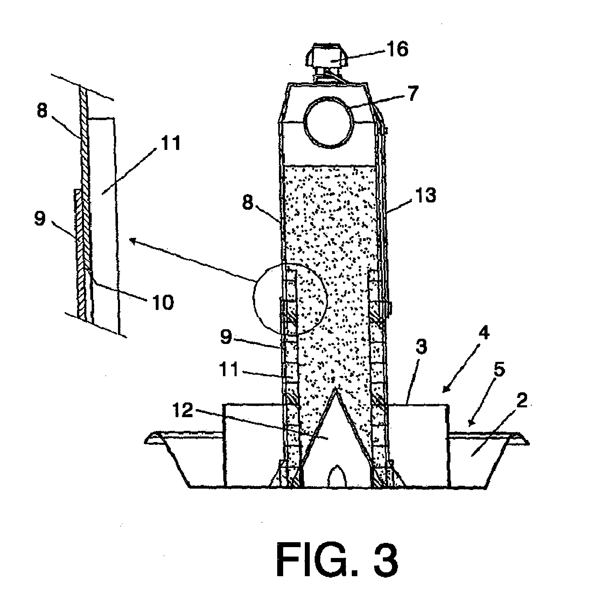

The fixed interior tube (8) does not reach the bottom of the central chamber (4), but remains separated from the bottom of the same and preferably the lower edge (10) of said fixed interior tube (8) remains situated above the free edge of the internal wall (3) of the plate (1), as represented in the detail of figure 3. This fixed interior tube (8) is supported by a series of vertical rods (11) which are soldered to the internal surface of the wall of said fixed interior tube (8), while its lower part rests and is fixed over the bottom of the central chamber (4). Between the rods (11) and from the bottom of the central chamber (4), a cone (12) protrudes which will act as a feed distribution element, according to that explained further on. At its upper part the fixed interior tube (8) is connected to the main supply pipe (7) of feed.

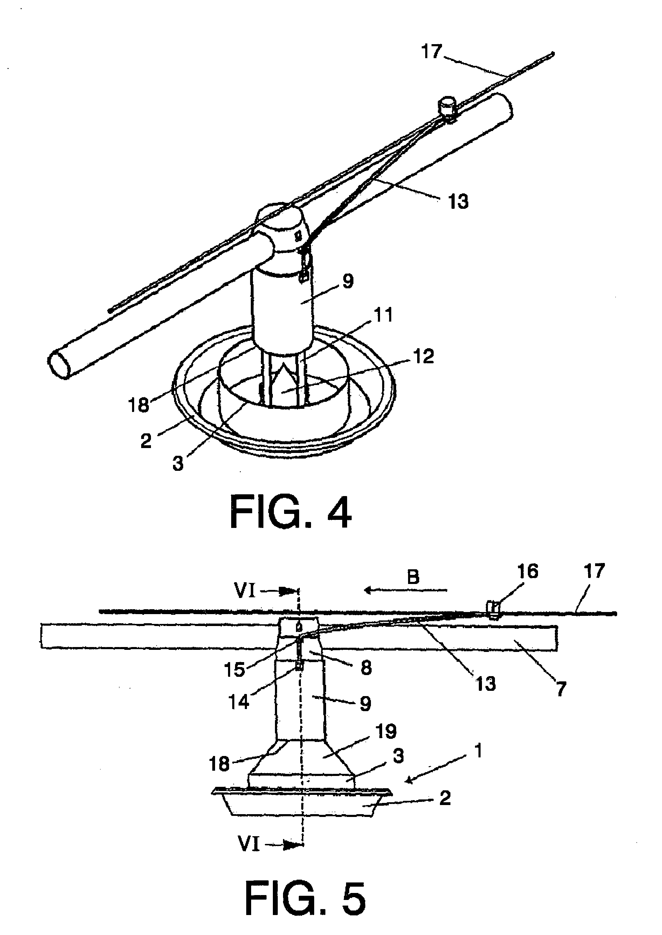

The exterior tube (9) is moveable vertically over the fixed interior tube (8) between a lower position, shown in figures 1 and 3, and an upper position, shown in figures 4 to 6. The movement from the lower position to the upper position is achieved through means for actuation constituted by a flexible cord (13) that is fixed at one end to the external surface of the exterior tube (9), at a point (14) situated near the upper edge of said exterior tube (9). This flexible cord (13) passes through a ring (15) fixed to the interior tube (8) and is connected at its free upper end, for example by way of an adjustable anchoring (16), to a traction cable (17) which runs parallel to the main pipe (7).

To move the exterior tube (9) from the lower position represented in figures 1 and 3 to the upper position shown in figures 4 to 6, the traction cable (17) will be moved in the direction of the arrow A in figure 1, as a result the cord (13) will be pulled and will move the exterior tube (9) in a rising direction until it reaches the position in figures 4 to 6, In which the lower edge (18) of the exterior tube (9) remains situated above the free edge of the internal wall (3) of the plate (1), according to that clearly appreciated in figure 5.

Moving the traction cable (17) in the direction of arrow B in figure 5, the cord (13) stops pulling and is freed, in such a way that the exterior tube (9) falls as a result of gravity, due to its own weight, until reaching the position in figures 1 and 3, in which it rests above the bottom of the central chamber (4).

With the commented constitution, situating the exterior tube (9) in its upper position, shown in figures 4 to 6, it is possible to proceed with the supply of feed through the main pipe (7), which will fall onto the bottom of the central chamber (4) until it is full, and if the feeding continues through the main pipe (7), the central chamber (4) will overflow, and the feed will fall into the annular chamber (5) until reaching the height desired in the same, at which point the supply will be closed through the main pipe (7). In this situation young chickens can reach the feed contained in the annular chamber (5), without any problem.

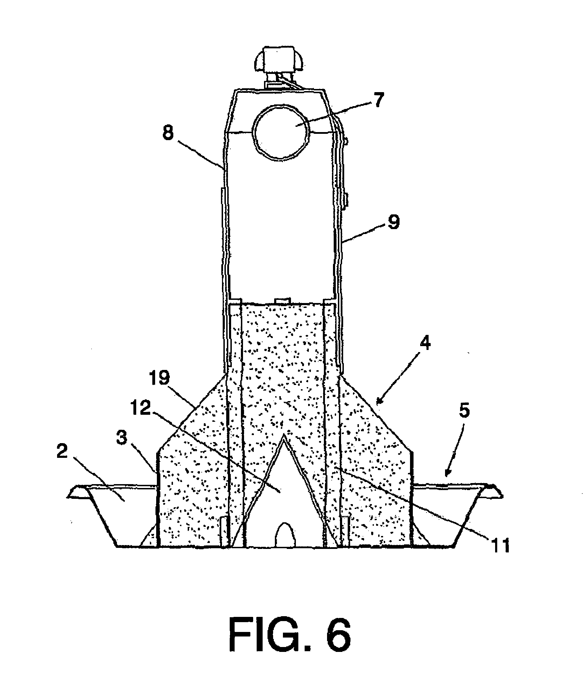

On the other hand, when the chickens reach a determined size or height, the supply through the main pipe (7) is carried out until the feed in the central chamber (4) protrudes slightly, for example forming a conic pile (19) as shown in figures 5 and 6, at which point the supply of feed is closed through the main pipe (7). In this situation the larger chickens will reach the feed contained in the central chamber (4) and the parts which could be scattered from the same will be collected by the annular chamber (5), also accessible by the chickens, in such a way that practically all the feed supplied through the main pipe (7) is not wasted by the chickens.

According to that appreciated in figures 3, 5 and 6, the internal wall (3) of the plate (1) is higher than the external wall (2), protruding higher than the aforementioned.

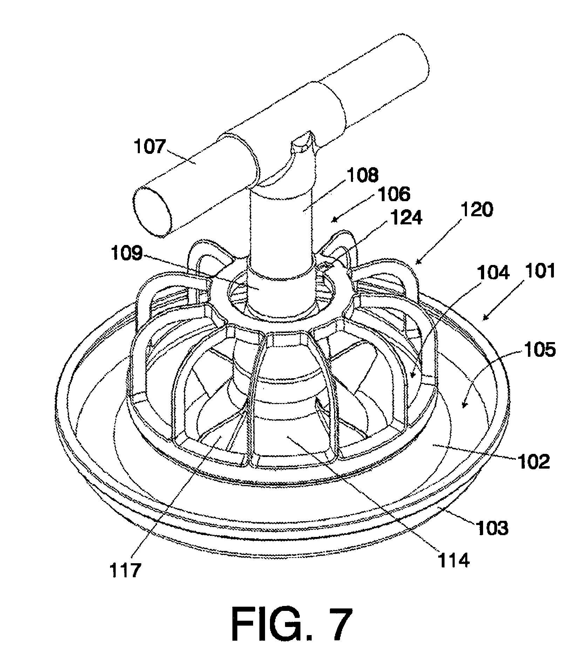

Described below is a preferred embodiment of the feeding trough for birds, represented in figures 7- 12 previously indicated, according to the invention.

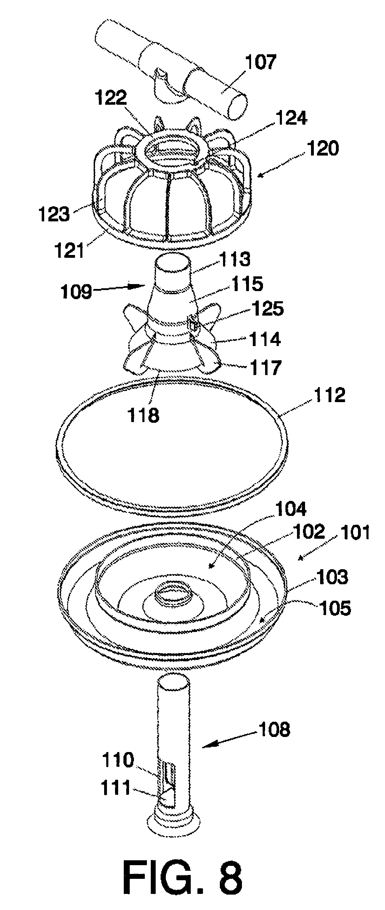

According to that shown in figures 7 and 8, the feeding trough for poultry comprises a plate (101) with a double coaxial wall, one internal (102) and the other external (103), which delimit a central chamber (104) and an annular chamber (105). In this plate (101) a vertical feeding column (106) is fitted which comes out of a main supply pipe (107) of feed, which runs along the length of the poultry installation to feed all the feeding troughs in said installation.

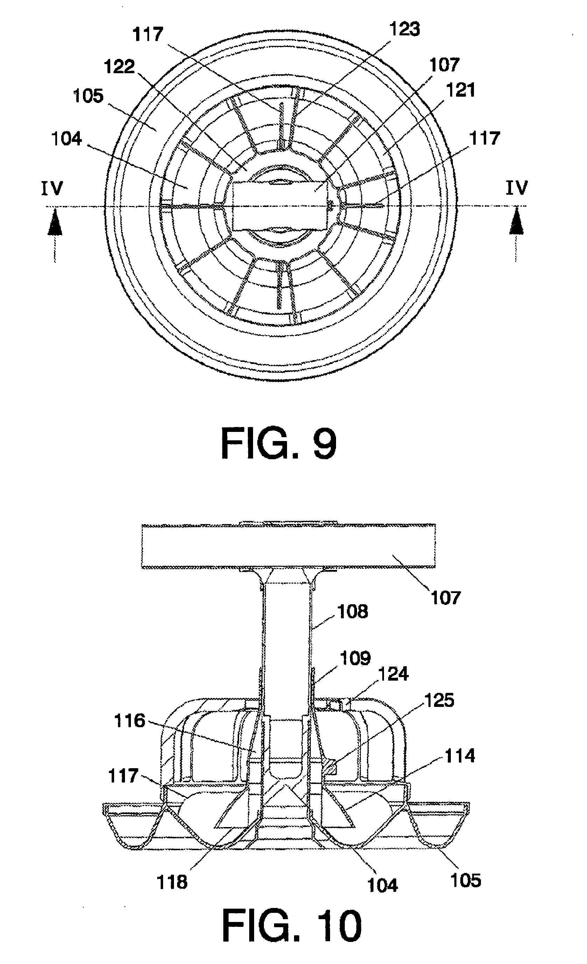

Said feeding column (106) comprises a fixed interior tube (108) and a moveable exterior tube (109). As it can be appreciated in figure 10, the fixed interior tube (108) comes out of the main supply pipe (107) of feed and pours into the central chamber (104) through one or more lateral mouths (110), as shown in figure 8. In said figure 8 it can be appreciated that the fixed interior tube (108) remains closed at its lower part by a distribution cone (111). Likewise, over the upper free edge of the external wall (103) of the plate (101) a lip or ring (112) could be attached shown in said figure 8.

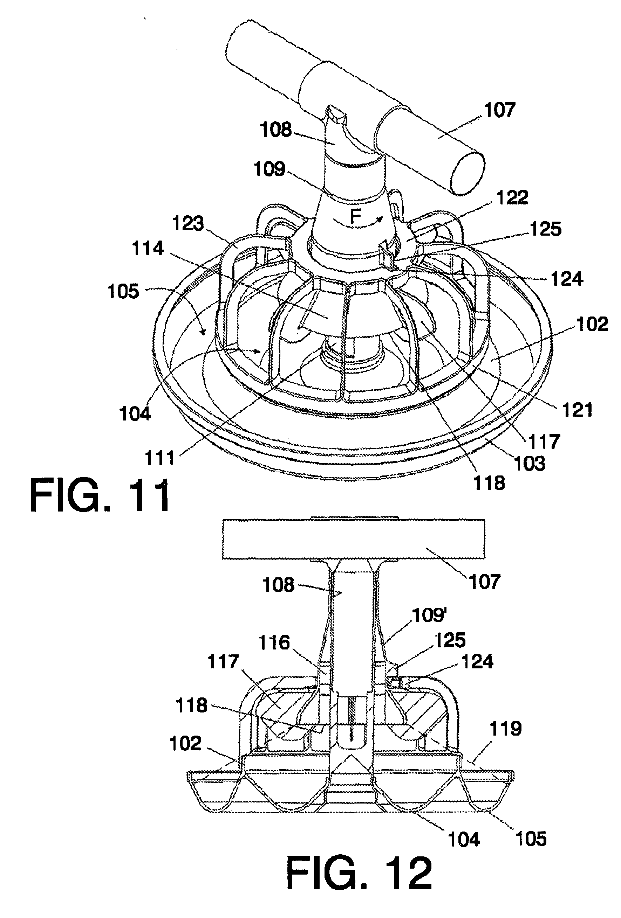

In the example represented in figures 7-12, the fixed interior tube (108) has a cylindrical configuration. In turn, the moveable exterior tube (109) comprises an upper cylindrical section (113), with an internal diameter approximately equal to the external diameter of the fixed interior tube (108), a lower section (114) with a cross section increasing in a descending direction, and an intermediate cross section (115) variable between the upper section (113) and the lower section (114). Likewise, between the internal surface of the intermediate (115) and lower (114) sections and the fixed interior tube (108) a chamber (116) is formed for storing feed represented in figures 10 and 12.

Furthermore, according to that which can be appreciated in figure 8, from the lower section (114) of the moveable exterior tube (109) some radial fins (117) protrude which extend under the lower edge (118) of said exterior tube (109) to act as means of support of the same over the bottom of the central chamber (104), as represented in figure 10. In this position the lower edge (118) of the moveable exterior tube (109) remains separated from the bottom of the central chamber (104), in such a way that the feed contained in the storage chamber (116) will be able to fall progressively to said central chamber (104), according to that consumed by the birds.

As a result, when wanting to fill the feeding trough with feed proceeding from the main pipe (107), the moveable exterior tube (109) is elevated manually to a upper limit position (109'), figure 12, in which the lower edge (118) of the moveable exterior tube (109) remains situated above the upper free edge of the internal wall (102) of the plate (101) and also above the mouth (110) of the fixed interior tube (108). In this situation the feed will exit freely filling the central chamber (104), from which it can pour into the annular chamber (105). In order to do this the exterior tube (109) is turned manually, in such a way that the fins (117) push the feed towards the annular chamber (105), in such a way that it can reach a conic (119) distribution or storage of feed over the two chambers (104, 105), as represented in figure 12.

Subsequently the moveable exterior tube (109) is freed which will progressively descend until it reaches the lower limit position in figure 10, in which it allows the feed contained in the adjacent storage chamber (116) to exit into the central chamber (104). When the feed is deposited forming the conic (119) storage in figure 12, the smaller chickens can eat from the annular chamber (105), while the bigger chickens can reach the central chamber (104) and the feed which could spill from the same would fall into the annular chamber (105). On the other hand, when the feed contained in the annular chamber (105), is nearly running out, the chickens will have already reached a large enough size to reach the feed in the central chamber (104).

With the aim of being able to maintain the moveable exterior tube (109) at its upper limit position in figure 12 in all the feeding troughs in the installation, each feeding trough includes a cage (120), shown more clearly in figures 7, 8 and 11, which comprises a lower ring (121), which is supported over the upper edge of the exterior wall (103) of the plate (101), and an upper ring (122), which remains around the moveable exterior tube (109), slightly separated from the same, and a series of arched arms (123) which run between the lower (121) and upper (122) rings.

Said upper ring (122) has, from its internal surface, an axial channel (124) represented in figures 7 and 8. In turn the moveable exterior tube (109) has an external radial projection (125), with an adapted size to be able to pass along the axial channel (124) of the upper ring (122) of the cage (120), for example when said exterior tube (109) moves from the lower limit position in figure 10 to the upper limit position in figure 12.

Once the radial projection (125) has passed over the upper ring (122) of the cage (120), the exterior tube (109) is turned in accordance with that represented in figure 11 by way of the arrow F, in such a way that the radial projection (125) remains displaced with respect to the axial channel (124) and is supported over the upper ring (122) of the cage (120). In this situation the moveable exterior tube (109) of all the feeding troughs in the installation can be maintained in the upper limit position, for the corresponding supply of feed.

In turn, the radial fins (117), with the constitution described previously, act as means to launch part of the feed contained in the central chamber (104) into the annular chamber (105) and also as axial projections which exit below the lower edge of the exterior tube (109) to constitute support elements over the bottom of the central chamber (104), situated as such so that the lower edge (118) of the exterior tube (109) remains situated at a height comprised between the bottom of the central chamber (104) and the upper free edge of the interior wall (102) of the plate (101).

Finally, it is envisaged that said fins (117) can have a lower outline which coincides with the cross section or profile of the bottom of the central chamber (104) to ensure the support over the same.

## Claims

1. Feeding trough for poultry, fed from a main supply pipe (7, 107) of feed comprising:
- a plate (101) with a double coaxial wall, one internal (102) and the other external (103), which delimit a central chamber (104) and an annular chamber (105), and
- a vertical feeding column (106), fitted to the bottom of the central chamber (104) in a central position and reaches up to the main supply pipe ( 107) of feed, to which said feeding column (106) remains connected, as it comprises two coaxial tubes, one fixed interior tube (108) which at its upper part comes out of the main pipe (107), and another exterior tube (109) which is moveable vertically over the interior tube (108) between upper and lower limit positions,
**characterised in that** the moveable exterior tube (109) additionally comprises some radial fins (117) which protrude below its lower edge (118) and which constitute means of support of said exterior tube (109) over the bottom of the central chamber (104) when said exterior tube (109) is in its lower limit position.

2. Feeding trough for poultry, according to claim 1, **characterised in that** the moveable exterior tube (109) comprises an upper section (113) with an internal diameter approximately equal to the external diameter of the fixed interior tube (108); a lower section (114) with a cross section increasing in a descending direction and from which radial fins (117) protrude; and an intermediate cross section (115) variable between the upper section (113) and the lower section (114).

3. Feeding trough for poultry according to claim 2, **characterised in that** the moveable exterior tube (109) additionally comprises a chamber (116) for storing feed formed between the internal surface of the intermediate (115) and lower (114) sections and the fixed lower tube (108).

4. Feeding trough for poultry according to any of the claims 1-3, **characterised in that** it additionally comprises a cage (120) adapted to maintain the moveable exterior tube (109) in its upper limit position.

5. Feeding trough for poultry according to claim 4, **characterised in that** the cage (120) comprises a lower ring (121) which is supported over the upper edge of the exterior wall (103) of the plate (101); and an upper ring (122), which remains situated around the moveable exterior tube (109), separated from the same to allow axial movement; and a series of arched arms (123) which run between the upper (122) and slower (121) rings and which delimit access gaps to the central chamber (104).

6. Feeding trough for poultry according to claim 5, **characterised in that** upper ring (122) of the cage (120) has on its internal surface at least one axial channel (124).

7. Feeding trough for poultry according to claims 5 and 6, **characterised in that** the moveable exterior tube (109) additionally comprises at least one radial projection (125) adapted in size to be able to pass along the axial channel (124) of the upper ring (122) of the cage (120).

8. Feeding trough for poultry according to claim 1, **characterised in that** the fins (117) have a lower outline which coincides with the cross section or profile of the bottom of the central chamber (104) to ensure the support over the same.

## Patentansprüche

1. Futtertrog für Geflügel, der von einem Futter-Hauptversorgungsrohr (7, 107) mit Futter versorgt wird und Folgendes umfasst:
- eine Platte (101) mit einer doppelten koaxialen Wand, eine intern (102) und die andere extern (103), die eine zentrale Kammer (104) und eine ringförmige Kammer (105) begrenzen, und
- eine vertikale Versorgungssäule (106), die in einer mittigen Position am Boden der zentralen Kammer (104) befestigt ist und bis nach oben zum Futter-Hauptversorgungsrohr (107) reicht, mit der die besagte Versorgungssäule (106) verbunden bleibt, da diese zwei koaxiale Röhren umfasst, eine befestigte Innenröhre (108), die an deren oberen Teil aus dem Hauptrohr (107) herauskommt, und eine andere externe Röhre (109), die vertikal zwischen einer oberen und unteren Grenzposition über der Innenröhre (108) bewegbar ist, **dadurch gekennzeichnet, dass** die bewegbare externe Röhre (109) zusätzlich einige radiale Rippen (117) umfasst, die unter deren unterer Kante (118) herausragen und Stützmittel der besagten externen Röhre (109) über dem Boden der zentralen Kammer (104) bilden, wenn sich die besagte externe Röhre (109) an ihrer untere Grenzposition befindet.

2. Futtertrog für Geflügel nach Anspruch 1, **dadurch gekennzeichnet, dass** die bewegbare externe Röhre (109) einen oberen Abschnitt (113) mit einem Innendurchmesser umfasst, der ungefähr gleich dem Außendurchmesser der befestigten Innenröhre (108) ist; einen unteren Abschnitt (114) mit einem Querschnitt, der sich in absteigender Richtung vergrößert, und von dem radiale Rippen (117) herausragen; und einen Zwischenquerschnitt (115), der zwischen dem oberen Abschnitt (113) und dem unteren Abschnitt (114) variabel ist.

3. Futtertrog für Geflügel nach Anspruch 2, **dadurch gekennzeichnet, dass** die bewegbare externe Röhre (109) zusätzlich eine Kammer (116) zur Speicherung von Futter umfasst, die zwischen der Innenfläche des Zwischenabschnitts (115) und unteren Abschnitts (114) und der befestigten unteren Röhre (108) gebildet ist.

4. Futtertrog für Geflügel nach einem der Ansprüche 1-3, **dadurch gekennzeichnet, dass** dieser zusätzlich einen Käfig (120) umfasst, der dazu ausgelegt ist, die bewegbare externe Röhre (109) in ihrer oberen Grenzposition zu halten.

5. Futtertrog für Geflügel nach Anspruch 4, **dadurch gekennzeichnet, dass** der Käfig (120) einen unteren Ring (121) umfasst, der über der oberen Kante der externen Wand (103) der Platte (101) abgestützt ist; und einen oberen Ring (122), der um die bewegbare externe Röhre (109) herum und von derselben getrennt angeordnet verbleibt, um eine axiale Bewegung zu erlauben; und eine Reihe von bogenförmigen Armen (123), die zwischen dem oberen Ring (122) und dem unteren Ring (121) verlaufen und Zugangslücken zur zentralen Kammer (104) begrenzen.

6. Futtertrog für Geflügel nach Anspruch 5, **dadurch gekennzeichnet, dass** der obere Ring (122) des Käfigs (120) an seiner Innenfläche mindestens einen axialen Kanal (124) besitzt.

7. Futtertrog für Geflügel nach Anspruch 5 und 6, **dadurch gekennzeichnet, dass** die bewegbare externe Röhre (109) zusätzlich mindestens einen radialen Vorsprung (125) umfasst, dessen Größe dazu angepasst ist, entlang des axialen Kanals (124) des oberen Rings (122) des Käfigs (120) zu passieren.

8. Futtertrog für Geflügel nach Anspruch 1, **dadurch gekennzeichnet, dass** die Rippen (117) einen unteren Umriss besitzen, der mit dem Querschnitt oder Profil des Bodens der zentralen Kammer (104) übereinstimmt, um die Abstützung auf demselben sicherzustellen.

## Revendications

1. Mangeoire pour volailles, alimentée à partir d'un tuyau d'alimentation principal (7, 107) d'aliments pour animaux comprenant :
- une plaque (101) avec une double paroi coaxiale, l'une interne (102) et l'autre externe (103), lesquelles délimitent une chambre centrale (104) et une chambre annulaire (105), et
- une colonne d'alimentation verticale (106), assemblée au fond de la chambre centrale (104) dans une position centrale et qui atteint le tuyau d'alimentation principal (107) d'aliments pour animaux, auquel ladite colonne d'alimentation (106) reste connectée, puisqu'elle comprend deux tubes coaxiaux, un tube intérieur fixe (108) qui au niveau de sa partie supérieure sort du tuyau principal (107), et un autre tube extérieur (109) qui est mobile à la verticale sur le tube intérieur (108) entre les positions limites supérieure et inférieure,
**caractérisée en ce que** le tube extérieur mobile (109) comprend en outre des ailettes radiales (117) qui dépassent en dessous de son bord inférieur (118) et qui constituent des moyens de support dudit tube extérieur (109) sur le fond de la chambre centrale (104) lorsque ledit tube extérieur (109) est dans sa position limite inférieure.

2. Mangeoire pour volailles selon la revendication 1, **caractérisée en ce que** le tube extérieur mobile (109) comprend une section supérieure (113) avec un diamètre interne approximativement égal au diamètre externe du tube intérieur fixe (108) ; une section inférieure (114) avec une section transversale croissante dans le sens descendant et de laquelle dépassent des ailettes radiales (117) ; et une section transversale intermédiaire (115) variable entre la section supérieure (113) et la section inférieure (114).

3. Mangeoire pour volailles selon la revendication 2, **caractérisée en ce que** le tube extérieur mobile (109) comprend en outre une chambre (116) pour stocker des aliments pour animaux formée entre la surface interne des sections intermédiaire (115) et inférieure (114) et le tube inférieur fixe (108).

4. Mangeoire pour volailles selon n'importe laquelle des revendications 1-3, **caractérisée en ce qu'**elle comprend en outre une cage (120) adaptée pour maintenir le tube extérieur mobile (109) dans sa position limite supérieure.

5. Mangeoire pour volailles selon la revendication 4, **caractérisée en ce que** la cage (120) comprend une bague inférieure (121) qui repose sur le bord supérieur de la paroi extérieure (103) de la plaque (101); et une bague supérieure (122), qui reste située autour du tube extérieur mobile (109), séparée de ce dernier pour permettre un mouvement axial ; et une série de bras courbés (123) qui passent entre les bagues supérieure (122) et inférieure (121) et qui délimitent des espaces d'accès à la chambre centrale (104).

6. Mangeoire pour volailles selon la revendication 5, **caractérisée en ce que** la bague supérieure (122) de la cage (120) possède sur sa surface interne au moins un canal axial (124).

7. Mangeoire pour volailles selon les revendications 5 et 6, **caractérisée en ce que** le tube extérieur mobile (109) comprend en outre au moins une projection radiale (125) dont la taille est adaptée pour pouvoir passer le long du canal axial (124) de la bague supérieure (122) de la cage (120).

8. Mangeoire pour volailles selon la revendication 1, **caractérisée en ce que** les ailettes (117) ont un contour inférieur qui coïncide avec la section transversale ou profil du fond de la chambre centrale (104) pour assurer le support sur ce dernier.
